**Europäisches Patentamt**

**European Patent Office**

**Office européen des brevets**

(19)

(11) Veröffentlichungsnummer: **0 394 845**
**A2**

(12) **EUROPÄISCHE PATENTANMELDUNG**

(21) Anmeldenummer: **90107441.9**

(22) Anmeldetag: **19.04.90**

(51) Int. Cl.⁵: $B29C\ 67/14$

(30) Priorität: **27.04.89 DE 3913836**

(43) Veröffentlichungstag der Anmeldung:
**31.10.90 Patentblatt 90/44**

(84) Benannte Vertragsstaaten:
**AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Minor, Roman**
**Scheffelstrasse 4**
**D-6711 Laumersheim(DE)**
Erfinder: **Woltron, Herbert**
**Bachweg 1**
**D-6520 Worms(DE)**

(54) Vorrichtung zur Herstellung von Bauteilen aus laminiertem Bandmaterial.

(57) Für eine kontinuierlich ablaufende, vollmechanisierte Fertigung von Bauteilen aus geschichteten Bandabschnitten, beispielsweise aus Faserverbundwerkstoff, ist durch die vorliegende Erfindung eine Vorrichtung geschalten, die aus einer längs des Transports des bandförmigen Ausgangsmaterials (2) synchron mit diesem fahrbaren und rückführbaren, mit mindestens einer Auflageplatte (6) ausgestatten Schneideinreichtung (1) und einer mit dieser fahrbaren Ablage- und Stapeleinheit (3) besteht, zu der die Auflageplatte schwenkbar ist und die relativ zur Auflageplatte positionierbar ist.

FIG.1

EP 0 394 845 A2

Die Erfindung betrifft eine Vorrichtung zur Herstellung von Bauteilen durch Laminieren von Abschnitten kontinuierlich herangeführten, bandförmigen Materials.

Die vollmechanisierte Herstellung von Bauteilen aus geschichtetem Bandmaterial, beispielsweise von Rohlingen für Blattfedern aus Faserverbundwerkstoffen erfordert, daß für einen kontinuierlichen Fertigungsablauf alle Herstelleinheiten so aufeinander abgestimmt sind, daß das mit konstanter Geschwindigkeit produzierte Materialband zu Bauteilrohlingen in einer Anzahl pro Zeiteinheit verarbeitet werden kann, die dem Arbeitstakt einer die Rohlinge zusammenfügenden Maschine, beispielsweise einer Presse, entspricht.

Es war daher die Aufgabe zu lösen, eine Vorrichtung zur Herstellung von Bauteilen aus laminiertem Bandmaterial bereitzustellen, bei der das Schneiden des bandförmigen Materials und das Stapeln der Bandabschnitte zu Bauteilrohlingen an den kontinuierlichen Zulauf des Bandmaterials und an das nachfolgende taktweise Weiterverarbeiten der Rohlinge angepßt sind. Dabei sollen nicht nur unterschiedliche Abschnittslängen innerhalb eines Stapels möglich, sondern auch in allen Dimensionen unterschiedliche Bauteile herstellbar sein.

Die zur Lösung der Aufgabe entwickelte Vorrichtung besteht aus einer Schneideinrichtung für das Bandmaterial und Auflagemitteln dafür, einer Ausgleichseinrichtung für den während des Schneidvorgangs unterbrochenen Bandvorschub und einer den Auflagemitteln zugeordneten Längenmeßeinrichtung für die abzutrennenden Bandabschnitte, sowie aus einer relativ zu den Auflagemitteln positionierbare Ablage- und Stapeleinheit und einer diesen zugeordneten Überführungseinrichtung für die Bandabschnitte.

Weitere Einzelheiten und Vorteile der Vorrichtung nach der Erfindung sind an einem in der Zeichnung schematisch dargestellten Ausführungsbeispiel nachfolgend beschrieben.

Es zeigen

Figur 1 die Vorrichtung in einer Gesamtansicht

Figur 2 eine Anordnung von Auflagestäben (Teilansicht)

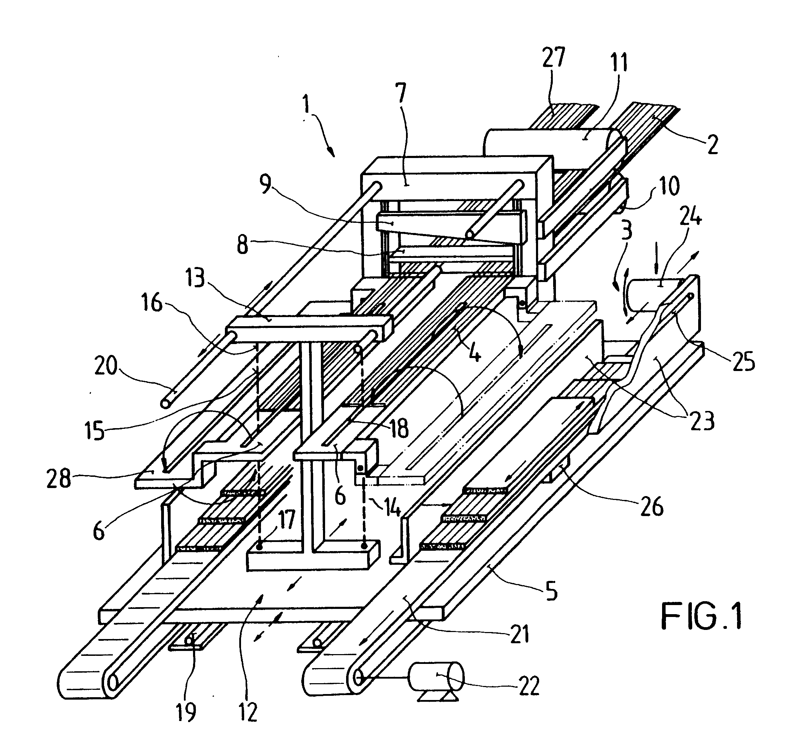

Die Vorrichtung besteht im wesentlichen aus zwei Funktionseinheiten (Figur 1): einer Schneideinrichtung 1 für die das kontinuierlich zulaufende bandförmige Material 2, im vorliegenden Ausführungsbeispiel ein Band aus Faserverbundwerkstoff, ein sog. Prepregband, und einer Ablage- und Stapeleinheit 3 für die Banabschnitte 4, die auf eine gemeinsame Grundplatte 5 moniert sind.

Die Schneideinrichtung 1 weist eine erste, langgestreckte Auflageplatte 6 für das von einer Produktionsanlage zulaufende Materialband 2 auf, zu der in einem Rahmen 7 eine Klemmleiste 8 und ein Messer 9 bewegbar sind. Als Antrieb für die Klemmleiste und das Messer dient ein für derartige Schneidmechaniken üblicher, in der Zeichnung nicht zu sehender Arbeitszylinder.

Die Länge der abzutrennenden Abschnitte des durch ein Walzenpaar 10 und 11 geförderten und kontinuierlich über die Auflageplatte 6 laufenden Bandes 2 kann über die Umdrehungen der Förderwalzen oder, wie im vorliegenden Ausführungsbeispiel, mit Hilfe einer Längenmeßeinrichtung 12 bestimmt werden, die aus einer in einem Träger 13 gehaltenen, die Auflageplatte einschließenden Signalschranke 14, beispielsweise einer Lichtschranke, besteht. Zum Durchtritt des Lichtstrahls 15 zwischen einer Lichtquelle 16 und einr Photozelle 17 ist die Auflageplatte mit einem Längsschlitz 18 versehen. Sobald die Lichtschranke vom Materialband erreicht wird, schaltet die Photozelle den Antrieb der Klemmleiste 8 und des Messers 9. Während des Schneidvorgangs wird die Schneidvorrichtung mit dem Band mitbewegt. Hierzu ist die Grundplatte 5 in Richtung des Bandtransports bewegbar gelagert, beispielsweise mittels Linearkugellager 19 und mit einem Antrieb, beispielsweise einem Servomotor verbunden, der aktiviert wird, sobald die Klemmleiste das Band berührt.

Der Träger 13 für die Signalschranke 14 ist auf der Grundplatte 5 längs der Auflageplatte 6 verschiebbar gehalten, beispielsweise durch am Rahmen 7 befestigte, als Längsführungen dienende Stangen 20, um die Länge der Bandabschnitte 4 variieren zu können.

Auf der gleichen Grundplatte 5 ist die Ablage- und Stapeleinheit 3 montiert, so daß diese auch während der Bewegung der Schneideinrichtung 1 der Auflageplatte 6 zugeordnet bleibt. Sie kann beispielsweise aus einer parallel zur Auflageplatte positionierbaren Aufnahmplatte bestehen, die zum Austragen des fertigen Abschnittstapels, des Bauteilrohlings, mittels einer Übergabestation an eine Transporteinrichtung zu einer Presse angeschlossen ist. Im dargestellten Ausführungsbeispiel ist zur Aufnahme der Bandabschnitte 4 ein seitlich der Auflageplatte 6 angeordnetes und parallel zu dieser bewegbares Förderband 21 mit einem steuerbaren Antrieb 22 vorgesehen, zu dem die Auflageplatte schwenkbar ist und dem im Stapelbereich beidseitig Anschlagplatten 23 für das seitliche Ausrichten der Abschnitte zugeordnet sind. Eine der beiden Anschlagplatten ist seitlich zum Förderband bewegbar. Durch gesteuertes Verfahren des Förderbandes kann für jeden Bandabschnitt die jeweils gewünschte Ablageposition eingestellt werden. Der fertige Abschnittstapel wird dann mit Hilfe des Förderbandes zur Weiterverarbeitung gebracht oder einer weiteren Transporteinrichtung zugeführt.

Es ist zweckmäßig, die Ablage- und Stapeleinheit 3 mit einer Andruckwalze 24 auszustatten, die in einer längs des Förderbandes 21 ausgedehnten Ausnehmung 25 geführt und mittels eines Linearantriebs reversierend über den Abschnittstapel fahrbar ist. Damit können die Bandabschnitte 4 während des Stapelvorgangs kompaktiert werden. Die Andruckkraft wird durch einen Arbeitszylinder erzeugt.

Das Gewicht des Abschnittstapels bezogen auf das Flächengewicht des Materialbandes ist ein Maß für die Qualität des hergestellten Bauteils. Zur Messung des Stapelgewichts wird daher das Förderband über eine geeignete Wägeeinrichtung 26 geführt, wobei nach der üblichen Differenzmeßmethode verfahren wird. Geeignete Wägeeinrichtungen stehen im Fachhandel zur Verfügung, so daß auf deren Beschreibung verzichtet werden kann. Eine Gewichtsbestimmung vor Beendigung des Stapelvorgangs erlaubt eine Korrektur durch Weglassen oder Hinzufügen von Abschnitten 4.

Nach dem Ablegen eines Bandabschnitts schwenkt die Auflageplatte 6 in die Ausgangslage zurück. Ebenso fährt die bis dahin mitbewegte Grundplatte 5 mit sämtlichen Einrichtungen für den nächsten Schneid- und Stapelvorgang in die Ausgangsposition. Dieser Vorgang muß abgeschlossen sein, bevor das inzwischen weitertransportierte Materialband 2 die Lichtschranke 14 erreicht. Für den Fall, daß im Hinblick auf sehr kurze Bandabschnitte mit einem Bandstau gerechnet werden muß, können vor der Schneideinrichtung geeignete Kompensationseinrichtungen, wie Tänzerwalzen oder steuerbare Schleifenpuffer, vorgesehen werden.

Das Zurückschwenken der Auflageplatte kann entfallen, wenn, wie in der Zeichnung bei einer zweiten Materialbahn 27 zu sehen, eine zweite Auflageplatte 28 in achsensymmetrischer und paralleler Anordnung mit der ersten verbunden ist. Dementsprechend steht nach dem Schwenken der ersten Auflageplatte 6 zum Förderband die zweite Platte 28 für die Aufnahme des nächsten Bandabschnitts bereit.

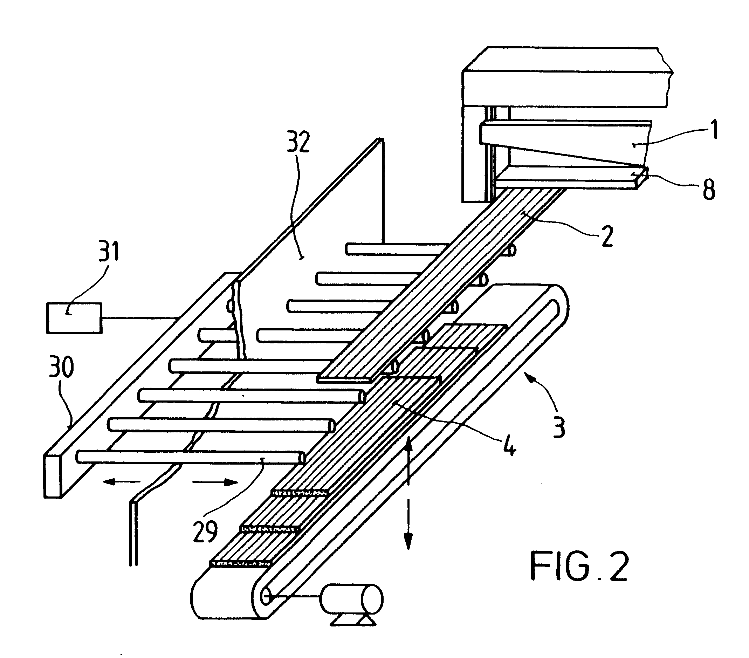

Anstelle der Auflageplatte 6 kann auch eine Reihe hintereinander und quer zum Bandtransport angeordneter Stäbe 29 (Figur 2) vorgesehen werden, die über eine Halteschiene 30 mittels eines Arbeitszylinders 31 aus der Transportbahn des Bandmaterials 2 verschiebbar sind. Durch eine Anschlagleiste 32 wird erreicht, daß die Bandabschnitte 4 von den Stäben abgestreift werden und dadurch auf eine darunter angeordnete, höhenverstellbare Ablage- und Stapeleinheit 3 fallen können. Selbstverständlich können die Stäbe auch schwenkbar gelagert sein, sowie auch umgekehrt die Auflageplatte 6 verschiebbar gehalten sein kann.

Ferner kann anstelle der verschieblichen Lagerung der Schneidvorrichtung und der Auflagemittel 6, 29 zum Ausgleich des während des Schneidvorgangs unterbrochenen Bandvorschubs vor der Schneideinrichtung eine steuerbare Bandschleifenstrecke vorgesehen werden.

Für die Steuerung der Antriebe der vorstehend beschriebenen Maschineneinheiten können im Fachhandel zur Verfügung stehende Geräte eingesetzt werden, so daß darauf nicht näher eingegangen zu werden braucht.

## Ansprüche

1. Vorrichtung zur Herstellung von Bauteilen durch Laminieren von Abschnitten kontinuierlich herangeführten, bandförmigen Materials, gekennzeichnet durch eine Schneideinrichtung (1) für das Bandmaterial und Auflagemittel (6, 29) dafür, eine Ausgleichseinrichtung für den während des Schneidvorgangs unterbrochenen Bandvorschub und eine den Auflagemitteln zugeordnete Längenmeßeinrichtungen (12) für die abzutrennenden Bandabschnitte (4), sowie durch eine relativ zu den Auflagemitteln positionierbare Ablage- und Stapeleinheit (3) und eine diesen zugeordnete Überführungseinrichtung für die Bandabschnitte.

2. Vorrichtung nach Anspruch 1, dadurch gekennzeichnet, daß die Schneideinrichtung (1) und die Auflagemittel (6, 29) längs des Bandtransports synchron mit diesem fahrbar und rückführbar sind und die Ablage- und Stapeleinheit (3) mit der Schneideinrichtung fahrbar ist.

3. Vorrichtung nach Anspruch 1, dadurch gekennzeichnet, daß die Schneideinrichtung (1) und die Auflagemittel (6, 29) stationär angeordnet sind und der Schneideinrichtung eine steuerbare Bandschleifenstrecke vorgeordnet ist.

4. Vorrichtung nach Anspruch 1 bis 3, dadurch gekennzeichnet, daß die Auflagemittel und Überführungseinrichtung aus wenigstens einer Auflageplatte (6) bestehen, die zur Ablage- und Stapeleinheit (3) schwenkbar ist.

5. Vorrichtung nach Anspruch 4, dadurch gekennzeichnet, daß eine zweite Ablageplatte (28) in achsensymmetrischer Anordnung parallel zur ersten (6) vorgesehen ist.

6. Vorrichtung nach Anspruch 1 bis 3, dadurch gekennzeichnet, daß die Auflagemittel und Überführungseinrichtung aus einer Reihe hintereinander und quer zum Bandtransport angeordneter Stäbe (29) bestehen, die aus der Transportbahn bewegbar sind.

7. Vorrichtung nach Anspruch 1 bis 6, dadurch gekennzeichnet, daß die Längenmeßeinrichtung (12) aus einer die Auflagemittel (6, 29) einschließenden und längs dieser positionierbaren, die Schneideinrichtung (1) schaltenden Signalschranke (14) besteht.

8. Vorrichtung nach Anspruch 1 bis 7, dadurch gekennzeichnet, daß die Ablage- und Stapeleinheit (3) mit einer über den Stapel der Bandabschnitte (4) fahrbaren Andruckwalze (24) ausgestattet ist.

9. Vorrichtung nach Anspruch 1 bis 8, dadurch gekennzeichnet, daß die Ablage- und Stapeleinheit (3) mit einer Wägeeinrichtung (26) verbunden ist.

10. Vorrichtung nach Anspruch 1 bis 9, dadurch gekennzeichnet, daß das Positioniermittel für die abgelegten und gestapelten Bandabschnitte (4) ein längs der Auflagemittel (6, 29) bewegbares Förderband (21) ist.

EP 0 394 845 A2

FIG.1

FIG.2

EP 0 394 845 A2